# EUROPÄISCHE PATENTANMELDUNG

(11) **EP 3 839 131 A1**
(43) Veröffentlichungstag der Anmeldung: **23.06.2021**
(21) Anmeldenummer: 20211587.9
(22) Anmeldetag: 03.12.2020
(51) Int. Cl.: D06F 58/24, D06F 58/20, F16L 55/115, F16L 55/11

(54) **VERSCHLUSSEINHEIT UND DAMIT VERSEHENES GERÄT ZUM TROCKNEN VON WÄSCHE**

(30) Priorität: 19.12.2019 DE 102019220221
(71) Anmelder: BSH Hausgeräte GmbH, 81739 München (DE)
(72) Erfinder: Despang, Oliver, 15712 Königs Wusterhausen (DE); Drebant, Alexander, 12207 Berlin (DE); Lee, Linus, 16727 Oberkrämer (DE); Manig, Moritz, 10557 Berlin (DE)

(57) **Zusammenfassung**

Die Erfindung betrifft eine Verschlusseinheit (10, 15, 21, 24) zum Verschließen eines ungenutzten Schlauchanschlussstutzens (6) eines Geräts (1) zum Trocknen von Wäsche, wobei über den Schlauchanschlussstutzen (6) eine in einer Kondensatwanne des Geräts (1) enthaltene Flüssigkeit aus dem Gerät (1) abführbar ist. Um eine Prüfung, ob ein Schlauch an den Schlauchanschlussstutzen (6) angeschlossen ist oder nicht, robuster zu gestalten, ist zumindest ein Abschnitt der Verschlusseinheit (10, 15, 21, 24) gummielastisch ausgebildet.

## Beschreibung

Die Erfindung betrifft eine Verschlusseinheit zum Verschließen eines ungenutzten Schlauchanschlussstutzens eines Geräts zum Trocknen von Wäsche, wobei über den Schlauchanschlussstutzen eine in einer Kondensatwanne des Geräts enthaltene Flüssigkeit aus dem Gerät abführbar ist. Des Weiteren betrifft die Erfindung ein Gerät zum Trocknen von Wäsche, aufweisend wenigstens eine Spüleinheit zum Spülen von wenigstens einem Wärmetauscher einer thermisch an ein Prozessluftsystem des Geräts gekoppelten Wärmepumpe des Geräts, wobei die Spüleinheit wenigstens einen Kondensatbehälter und wenigstens eine Pumpe zum Pumpen einer in einer Kondensatwanne des Geräts enthaltenen Flüssigkeit über wenigstens eine Flüssigkeitsleitung in den Kondensatbehälter aufweist, wobei an der Flüssigkeitsleitung wenigstens eine Ventileinheit angeordnet ist, mit der die von der Pumpe geförderte Flüssigkeit wahlweise dem Kondensatbehälter oder einem Schlauchanschlussstutzen, an den ein Schlauch zum Abführen der Flüssigkeit aus dem Gerät anschließbar ist, zuführbar ist.

Ein Wäschetrockner kann mit einer Spüleinheit zum Spülen von wenigstens einem Wärmetauscher (Verdampfer, Verflüssiger) einer thermisch an ein Prozessluftsystem des Wäschetrockners gekoppelten Wärmepumpe des Wäschetrockners ausgestattet sein. Mittels der Spüleinheit kann das Spülen des Wärmetauschers automatisiert erfolgen, wobei durch das Spülen des Wärmetauschers Verunreinigungen, insbesondere Flusen, von dem Wärmetauscher abgespült werden, wodurch die Effizienz der Wärmepumpe und somit des Wäschetrockners verbessert wird.

Die Spüleinheit eines Wäschetrockners weist einen Kondensatbehälter und eine Pumpe zum Pumpen einer in einer unterhalb zumindest des zu spülenden Wärmetauschers der Wärmepumpe angeordneten Kondensatwanne des Wäschetrockners enthaltenen Flüssigkeit über eine Flüssigkeitsleitung in den Kondensatbehälter auf. Zum Spülen des Wärmetauschers kann die in dem Kondensatbehälter enthaltene Flüssigkeit schlagartig aus dem Kondensatbehälter abgelassen und über den Wärmetauscher geführt werden. An der Flüssigkeitsleitung ist üblicherweise eine Ventileinheit mit einer Ventilklappe angeordnet, mit der die von der Pumpe geförderte Flüssigkeit wahlweise dem Kondensatbehälter oder einem Schlauchanschlussstutzen, an den ein Schlauch zum Abführen der Flüssigkeit aus dem Wäschetrockner anschließbar ist, zuführbar ist.

In einer neuen Generation von Wäschetrocknern mit Spüleinheiten ist kein an den Schlauchanschlussstutzen angeschlossener Schlauch zum Abführen der Flüssigkeit aus dem Wäschetrockner mehr vorhanden. Hierdurch können Kosten eingespart werden. Ein solcher Wäschetrockner ist üblicherweise eingerichtet, automatisch zu prüfen, ob ein Schlauch an den Schlauchanschlussstutzen angeschlossen ist oder nicht. Hierzu kann die Pumpe eingeschaltet werden, während die Ventileinheit bzw. deren Ventilklappe zum Zuführen von mittels der Pumpe aus der Kondensatwanne abgepumpter Flüssigkeit zu dem Schlauchanschlussstutzen geschaltet ist. Über eine elektronische Überwachung eines Füllstands in der Kondensatwanne lässt sich dann elektronisch ermitteln, ob Flüssigkeit über den Schlauchanschlussstutzen und einen daran angeschlossenen Schlauch abgeführt werden konnte oder nicht. Ergibt sich aus der Füllstandüberwachung, dass keine oder nur eine zu geringe Menge Flüssigkeit aus der Kondensatwanne abgeführt werden konnte, lässt sich elektronisch darauf schließen, dass der ungenutzte Schlauchanschlussstutzen mit einer Verschlusseinheit verschlossen ist, also insbesondere kein Schlauch an den Schlauchanschlussstutzen angeschlossen ist.

Diese Prüfung, ob ein Schlauch an den Schlauchanschlussstutzen angeschlossen ist oder nicht, ist bislang aufgrund des folgenden physikalischen Effekts nicht robust. Während eines Trocknungsvorgangs erwärmt sich der gesamte Wäschetrockner und auch die Flüssigkeit, die zwischen der Ventileinheit und der an dem Schlauchanschlussstutzen angeordneten Verschlusseinheit in einem geschlossenen Raum eingeschlossen ist. Wenn sich anschließend der Wäschetrockner wieder abkühlt, entsteht in dem geschlossenen Raum ein Unterdruck, durch den die Ventilklappe derart stark an einen Ventilklappensitz angesaugt wird, dass die Ventileinheit nicht mehr zum Zuführen von Flüssigkeit zu dem Schlauchanschlussstutzen geschaltet werden kann. Die Ventileinheit kann dann zwar mechanisch vollständig in den Zustand zum Zuführen von Flüssigkeit zu dem Schlauchanschlussstutzen geschaltet sein, jedoch bleibt die Ventilklappe an dem Ventilsitz festgesaugt. Wird in diesem Zustand geprüft, ob ein Schlauch an den Schlauchanschlussstutzen angeschlossen ist oder nicht, wird Flüssigkeit mittels der Pumpe von der Kondensatwanne zu dem Kondensatbehälter gepumpt. Hierdurch kann fälschlicherweise darauf geschlossen werden, dass ein Schlauch an den Schlauchanschlussstutzen angeschlossen ist, da sich aus der Füllstandüberwachung ergibt, dass eine zu diesem Nachweis ausreichende Flüssigkeitsmenge aus der Kondensatwanne abgepumpt worden ist. Folglich ist die Prüfung, ob ein Schlauch an den Schlauchanschlussstutzen ist oder nicht, nicht ausreichend robust. Zudem besteht die Gefahr, dass dem Kondensatbehälter zu viel Flüssigkeit zugeführt wird bzw. der Kondensatbehälter unkontrolliert überläuft. Herkömmlich wurde das Problem der Unterdruckbildung in dem geschlossenen Raum dadurch umgangen, dass ein Schlauch von dem Schlauchanschlussstutzen zu dem Kondensatbehälter geführt worden ist.

Eine Aufgabe der Erfindung ist es, eine Prüfung, ob ein Schlauch an den Schlauchanschlussstutzen angeschlossen ist oder nicht, robuster zu gestalten.

Diese Aufgabe wird durch die unabhängigen Patentansprüche gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können. Ausgestaltungen der Verschlusseinheit können dabei Ausgestaltungen des Geräts entsprechen, und umgekehrt, selbst wenn im Folgenden hierauf im Einzelfall nicht explizit hingewiesen wird.

Bei einer erfindungsgemäßen Verschlusseinheit zum Verschließen eines ungenutzten Schlauchanschlussstutzens eines Geräts zum Trocknen von Wäsche, wobei über den Schlauchanschlussstutzen eine in einer Kondensatwanne des Geräts enthaltene Flüssigkeit aus dem Gerät abführbar ist, ist zumindest ein Abschnitt der Verschlusseinheit gummielastisch ausgebildet.

Erfindungsgemäß kann sich die Verschlusseinheit bzw. deren gummielastischer Abschnitt elastisch verformen, wenn zwischen der an dem Schlauchanschlussstutzen angeordneten Verschlusseinheit und einer mit dem Schlauchanschlussstutzen verbundenen Ventileinheit des Geräts, mit der eine von einer Pumpe zum Pumpen einer in einer Kondensatwanne des Geräts enthaltenen Flüssigkeit über wenigstens eine Flüssigkeitsleitung in einen Kondensatbehälter einer Spüleinheit des Geräts geförderte Flüssigkeit wahlweise dem Kondensatbehälter oder dem Schlauchanschlussstutzen zuführbar ist, ein Unterdruck herrscht. Hierdurch kann zuverlässig verhindert werden, dass der Unterdruck einen Druckwert erreicht, der ein Schalten der Ventileinheit in einen Zustand, in dem die Ventileinheit die Flüssigkeit dem Schlauchanschlussstutzen zuführen kann, verhindern könnte. Insbesondere könnte der Unterdruck, wenn er den Druckwert erreicht, eine Ventilklappe der Ventileinheit derart stark ansaugen, dass die Ventilklappe nicht von einem Ventilsitz abgehoben werden kann. Somit kann bei Verwendung der erfindungsgemäßen Ventileinheit in jedem Fall eine elektronische Prüfung durch das Gerät erfolgen, ob ein Schlauch an den Schlauchanschlussstutzen angeschlossen ist oder nicht. Damit ist die Prüfung robuster als bei herkömmlichen Geräten.

Der gummielastische Abschnitt der erfindungsgemäßen Verschlusseinheit kann beispielsweise als Membran ausgebildet sein. Der gummielastische Abschnitt kann monolithisch mit der übrigen Verschlusseinheit hergestellt sein. Insbesondere kann die Verschlusseinheit teilweise oder vollständig monolithisch hergestellt sein. Dabei kann die Verschlusseinheit teilweise oder vollständig aus einem gummielastischen Werkstoff hergestellt sein.

Die erfindungsgemäße Verschlusseinheit kann derart ausgebildet sein, dass zumindest ein Teil der Verschlusseinheit auf den Schlauchanschlussstutzen aufsteckbar oder in den Schlauchanschlussstutzen einsteckbar ist, wenn der Schlauchanschlussstutzen ungenutzt ist, wenn also kein Schlauch an den Schlauchanschlussstutzen angeschlossen ist.

Gemäß einer vorteilhaften Ausgestaltung weist die Verschlusseinheit einen Zylinderabschnitt, der auf den Schlauchanschlussstutzen aufsteckbar ist, und eine den Zylinderabschnitt axial verschließende Stirnwand auf, wobei die Stirnwand zumindest teilweise gummielastisch ausgebildet ist. Der Zylinderabschnitt kann monolithisch mit der Stirnwand hergestellt sein. Der Zylinderabschnitt ist als Hohlzylinder ausgebildet, so dass der Zylinderabschnitt zusammen mit der Stirnwand eine Kappe ausbildet. Die Stirnwand bzw. deren gummielastischer Abschnitt kann im unbelasteten Zustand der Verschlusseinheit konvex von dem Zylinderabschnitt weg oder konkav in Richtung des Zylinderabschnitts gewölbt oder eben ausgebildet sein.

Gemäß einer weiteren vorteilhaften Ausgestaltung weist die Verschlusseinheit einen Zylinderabschnitt, der auf den Schlauchanschlussstutzen aufsteckbar ist, und einen den Zylinderabschnitt axial verschließenden Gummifaltenbalg auf. Der Zylinderabschnitt kann monolithisch mit dem Gummifaltenbalg hergestellt sein. Der Zylinderabschnitt ist als Hohlzylinder ausgebildet, so dass der Zylinderabschnitt zusammen mit dem Gummifaltenbalg eine Kappe ausbildet.

Gemäß einer weiteren vorteilhaften Ausgestaltung weist die Verschlusseinheit wenigstens ein gummielastisches Halteelement auf, über das die Verschlusseinheit an einem abseits des Schlauchanschlussstutzens angeordneten Bauteil des Geräts festlegbar ist. Mittels des an dem Bauteil des Geräts festgelegten Halteelements kann verhindert werden, dass derjenige Teil der Verschlusseinheit, der an dem Schlauchanschlussstutzen festlegbar ist, nach einem Lösen von dem Schlauchanschlussstutzen in das Gerät fällt. Das Halteelement kann monolithisch mit der übrigen Verschlusseinheit hergestellt sein.

Ein erfindungsgemäßes Gerät zum Trocknen von Wäsche weist wenigstens eine Spüleinheit zum Spülen von wenigstens einem Wärmetauscher einer thermisch an ein Prozessluftsystem des Geräts gekoppelten Wärmepumpe des Geräts auf, wobei die Spüleinheit wenigstens einen Kondensatbehälter und wenigstens eine Pumpe zum Pumpen einer in einer Kondensatwanne des Geräts enthaltenen Flüssigkeit über wenigstens eine Flüssigkeitsleitung in den Kondensatbehälter aufweist, wobei an der Flüssigkeitsleitung wenigstens eine Ventileinheit angeordnet ist, mit der die von der Pumpe geförderte Flüssigkeit wahlweise dem Kondensatbehälter oder einem Schlauchanschlussstutzen, an den ein Schlauch zum Abführen der Flüssigkeit aus dem Gerät anschließbar ist, zuführbar ist. Erfindungsgemäß weist das Gerät wenigstens eine Verschlusseinheit nach einer der oben genannten Ausgestaltungen oder einer Kombination von wenigstens zwei dieser Ausgestaltungen miteinander auf, mit der der ungenutzte Schlauchanschlussstutzen verschlossen ist.

Mit dem Gerät sind die oben mit Bezug auf die Verschlusseinheit genannten Vorteile entsprechend verbunden. Das Gerät kann beispielsweise als Wäschetrockner, Waschtrockner oder Trockenschrank ausgebildet sein. Die Spüleinheit kann eingerichtet sein, einen Verdampfer und/oder einen Verflüssiger der Wärmepumpe zu spülen. Das Gerät kann einen geschlossenen Raum bzw. eine geschlossene Kammer aufweisen, über die die Ventileinheit mit dem Schlauchanschlussstutzen verbunden ist. Die Ventileinheit kann wenigstens eine Ventilklappe aufweisen, über deren jeweilige Stellung die von der Pumpe geförderte Flüssigkeit wahlweise dem Kondensatbehälter oder dem Schlauchanschlussstutzen zuführbar ist.

Die Erfindung ist nicht auf die angegebene Kombination der Merkmale der unabhängigen Ansprüche und der abhängigen Ansprüche beschränkt. Es ergeben sich darüber hinaus weitere Möglichkeiten, einzelne Merkmale, insbesondere dann, wenn sie sich aus den Ansprüchen, der nachfolgenden Beschreibung der Ausführungsbeispiele oder unmittelbar aus den Figuren ergeben, miteinander zu kombinieren. Außerdem soll die Bezugnahme der Ansprüche auf die Figuren durch die Verwendung von Bezugszeichen den Schutzumfang der Ansprüche auf keinen Fall auf die dargestellten Ausgestaltungsbeispiele beschränken.

Im Folgenden wird die Erfindung unter Bezugnahme auf die anliegenden Figuren anhand bevorzugter Ausführungsformen exemplarisch erläutert. Es zeigt:
- Fig. 1: eine schematische und perspektivische Darstellung eines Ausführungsbeispiels für ein erfindungsgemäßes Gerät;
- Fig. 2: eine schematische und perspektivische Viertelschnittdarstellung eines weiteren Ausführungsbeispiels für eine erfindungsgemäße Verschlusseinheit;
- Fig. 3: eine schematische und perspektivische Viertelschnittdarstellung eines weiteren Ausführungsbeispiels für eine erfindungsgemäße Verschlusseinheit; und
- Fig. 4: eine schematische und perspektivische Viertelschnittdarstellung eines weiteren Ausführungsbeispiels für eine erfindungsgemäße Verschlusseinheit.

In den Figuren sind gleiche bzw. gleichwirkende Bauteile mit denselben Bezugszeichen versehen. Eine wiederholte Beschreibung solcher Bauteile kann im Einzelfall weggelassen sein.

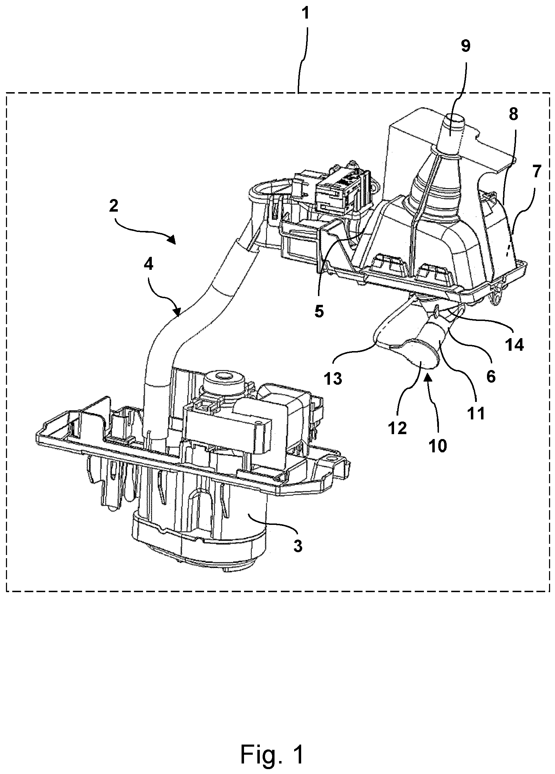

Fig. 1 zeigt eine schematische und perspektivische Darstellung eines Ausführungsbeispiels für ein erfindungsgemäßes Gerät 1 zum Trocknen von Wäsche. Das Gerät 1 weist eine Spüleinheit 2 zum Spülen von wenigstens einem nicht gezeigten Wärmetauscher einer thermisch an ein nicht gezeigtes Prozessluftsystem des Geräts 1 gekoppelten, nicht gezeigten Wärmepumpe des Geräts 1 auf.

Die Spüleinheit 2 weist einen nicht gezeigten Kondensatbehälter und eine Pumpe 3 zum Pumpen einer in einer nicht gezeigten Kondensatwanne des Geräts 1 enthaltenen Flüssigkeit über eine Flüssigkeitsleitung 4 in den Kondensatbehälter auf. An der Flüssigkeitsleitung 4 ist eine Ventileinheit 5 angeordnet, mit der die von der Pumpe 3 geförderte Flüssigkeit wahlweise dem Kondensatbehälter oder einem Schlauchanschlussstutzen 6, an den ein nicht gezeigter Schlauch zum Abführen der Flüssigkeit aus dem Gerät 1 anschließbar ist, zuführbar ist. Die Ventileinheit 5 weist wenigstens eine nicht gezeigte Ventilklappe und wenigstens einen elektrisch ansteuerbaren, nicht gezeigten Aktor zum Betätigen der Ventilklappe auf.

Die Ventileinheit 5 ist über eine geschlossene Kammer 7 mit dem Schlauchanschlussstutzen 6 verbunden, wobei die geschlossene Kammer 7 teilweise von einem Gehäuse 8 umschlossen ist, an dem ein Anschlussstutzen 9 ausgebildet ist, an dem ein nicht gezeigter weiterer Leitungsabschnitt der Flüssigkeitsleitung 4 anschließbar ist, über den die gepumpte Flüssigkeit dem Kondensatbehälter zuführbar ist. Der Abschnitt des Gehäuses 8, an dem der Anschlussstutzen 9 ausgebildet ist, ist von dem Abschnitt des Gehäuses 8, der die geschlossene Kammer 7 teilweise umschließt, getrennt, so dass diese Abschnitte nicht kommunizierend miteinander verbunden sind.

Das Gerät 1 weist zudem eine Verschlusseinheit 10 zum Verschließen des ungenutzten Schlauchanschlussstutzens 6 auf, mit der in Fig. 1 der ungenutzte Schlauchanschlussstutzen 6 verschlossen ist. Zumindest ein Abschnitt der Verschlusseinheit 10 ist gummielastisch ausgebildet. Insbesondere weist die Verschlusseinheit 10 einen Zylinderabschnitt 11, der auf den Schlauchanschlussstutzen 6 aufgesteckt ist, und eine den Zylinderabschnitt 11 axial verschließende, in dem in Fig. 1 gezeigten unbelasteten Zustand eben ausgebildete Stirnwand 12 auf, wobei die Stirnwand 12 zumindest teilweise gummielastisch ausgebildet ist. Ein Außenradius der Stirnwand 12 ist größer als ein Außenradius des Zylinderabschnitts 11.

Ferner weist die Verschlusseinheit 10 ein gummielastisches Halteelement 13 auf, über das die Verschlusseinheit 10 an einem abseits des Schlauchanschlussstutzens 6 angeordneten Bauteil 14 des Geräts 1 festgelegt ist. Das Halteelement 13 ist radial außen monolithisch mit der kreisscheibenförmig ausgebildeten Stirnwand 12 verbunden.

Das Gerät 1 kann wenigstens einen nicht gezeigten Füllstandsensor zum Erfassen eines Füllstands in der Kondensatwanne und wenigstens eine mit dem Füllstandsensor, der Pumpe und der Ventileinheit verbundene, nicht gezeigte Geräteelektronik aufweisen, mit der Sensorsignale des Füllstandsensors derart auswertbar sind, dass die Geräteelektronik prüfen kann, ob an den Schlauchanschlussstutzen 6 ein Schlauch angeschlossen ist oder nicht. Zudem kann die Geräteelektronik eingerichtet sein, einen Spülvorgang zum Spülen von wenigstens einem Wärmetauscher der Wärmepumpe durchzuführen.

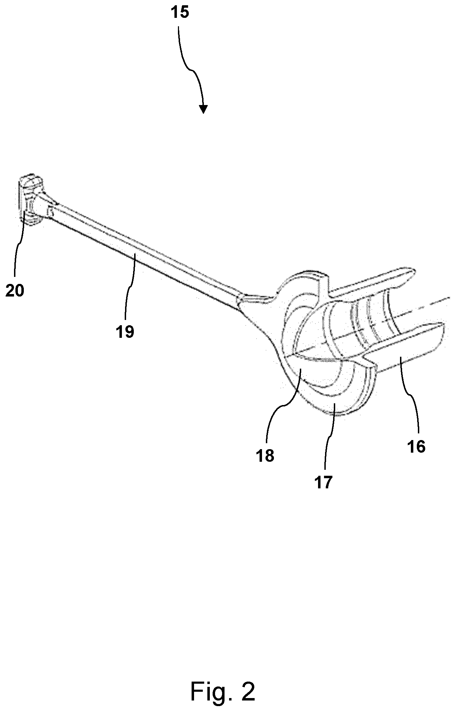

Fig. 2 zeigt eine schematische und perspektivische Viertelschnittdarstellung eines weiteren Ausführungsbeispiels für eine erfindungsgemäße Verschlusseinheit 15 zum Verschließen eines ungenutzten, nicht gezeigten Schlauchanschlussstutzens eines nicht gezeigten Geräts zum Trocknen von Wäsche. Bis auf die Verschlusseinheit 15 kann das Gerät entsprechend Fig. 1 ausgebildet sein.

Die Verschlusseinheit 15 weist einen Zylinderabschnitt 16, der auf den Schlauchanschlussstutzen aufsteckbar ist, und eine den Zylinderabschnitt 16 axial verschließende Stirnwand 17 auf, wobei die Stirnwand 17 zumindest teilweise gummielastisch ausgebildet ist. Insbesondere weist die Stirnwand 17 einen zentralen gummielastischen Abschnitt 18 auf, der in dem in Fig. 2 gezeigten unbelasteten Zustand der Verschlusseinheit 15 konvex von dem Zylinderabschnitt 16 weg gewölbt ausgebildet ist. Ein Außenradius der Stirnwand 17 ist größer als ein Außenradius des Zylinderabschnitts 16.

Zudem weist die Verschlusseinheit 15 ein gummielastisches Halteelement 19 auf, über das die Verschlusseinheit 15 an einem abseits des Schlauchanschlussstutzens angeordneten, nicht gezeigten Bauteil des Geräts festlegbar ist. Hierzu weist das Halteelement 19 an seinem freien Ende eine Verdickung 20 auf, die über einen Klemmsitz an dem Bauteil festlegbar ist.

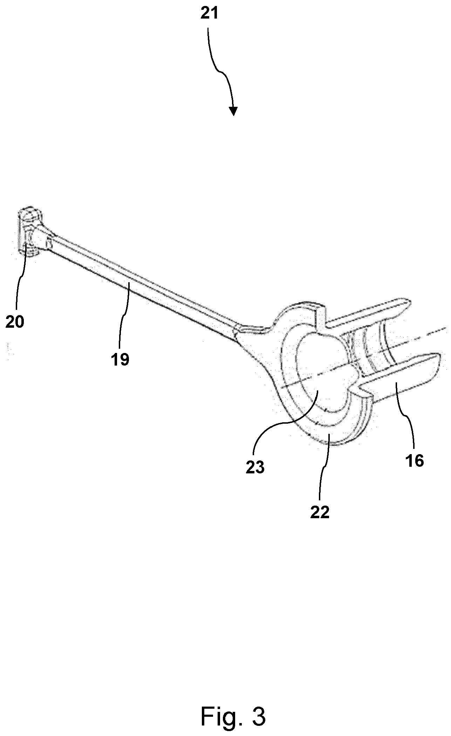

Fig. 3 zeigt eine schematische und perspektivische Viertelschnittdarstellung eines weiteren Ausführungsbeispiels für eine erfindungsgemäße Verschlusseinheit 21 zum Verschließen eines ungenutzten, nicht gezeigten Schlauchanschlussstutzens eines nicht gezeigten Geräts zum Trocknen von Wäsche. Bis auf die Verschlusseinheit 21 kann das Gerät entsprechend Fig. 1 ausgebildet sein.

Die Verschlusseinheit 21 unterscheidet sich lediglich dadurch von dem in Fig. 2 gezeigten Ausführungsbeispiel, dass die Stirnwand 22 einen zentralen gummielastischen Abschnitt 23 aufweist, der in dem in Fig. 3 gezeigten unbelasteten Zustand der Verschlusseinheit 21 konkav in Richtung des Zylinderabschnitts 16 gewölbt ausgebildet ist. Zur Vermeidung von Wiederholungen wird im Übrigen auf die obige Beschreibung zu Fig. 2 verwiesen.

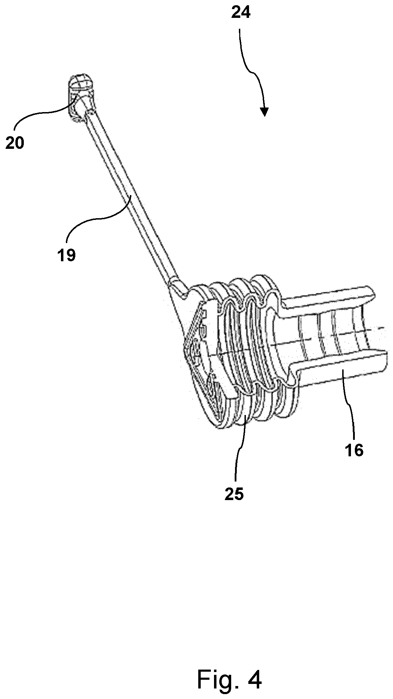

Fig. 4 zeigt eine schematische und perspektivische Viertelschnittdarstellung eines weiteren Ausführungsbeispiels für eine erfindungsgemäße Verschlusseinheit 24 zum Verschließen eines ungenutzten, nicht gezeigten Schlauchanschlussstutzens eines nicht gezeigten Geräts zum Trocknen von Wäsche. Bis auf die Verschlusseinheit 24 kann das Gerät entsprechend Fig. 1 ausgebildet sein.

Die Verschlusseinheit 24 unterscheidet sich lediglich dadurch von dem in Fig. 2 bzw. Fig. 3 gezeigten Ausführungsbeispiel, dass sie statt einer Stirnwand einen den Zylinderabschnitt 16 axial verschließenden Gummifaltenbalg 25 aufweist, der mit dem Halteelement 19 verbunden ist. Zur Vermeidung von Wiederholungen wird im Übrigen auf die obige Beschreibung zu Fig. 2 verwiesen.

### Bezugszeichenliste:

- 1: Gerät
- 2: Spüleinheit
- 3: Pumpe
- 4: Flüssigkeitsleitung
- 5: Ventileinheit
- 6: Schlauchanschlussstutzen
- 7: geschlossene Kammer
- 8: Gehäuse
- 9: Anschlussstutzen
- 10: Verschlusseinheit
- 11: Zylinderabschnitt von 10
- 12: Stirnwand von 10
- 13: Halteelement von 10
- 14: Bauteil von 1
- 15: Verschlusseinheit
- 16: Zylinderabschnitt von 15, 21, 24
- 17: Stirnwand von 15
- 18: gummielastischer Abschnitt von 17
- 19: Halteelement von 15, 21, 24
- 20: Verdickung von 19
- 21: Verschlusseinheit
- 22: Stirnwand von 21
- 23: gummielastischer Abschnitt von 22
- 24: Verschlusseinheit
- 25: Gummifaltenbalg

## Patentansprüche

1. Verschlusseinheit (10, 15, 21, 24) zum Verschließen eines ungenutzten Schlauchanschlussstutzens (6) eines Geräts (1) zum Trocknen von Wäsche, wobei über den Schlauchanschlussstutzen (6) eine in einer Kondensatwanne des Geräts (1) enthaltene Flüssigkeit aus dem Gerät (1) abführbar ist, **dadurch gekennzeichnet, dass** zumindest ein Abschnitt der Verschlusseinheit (10, 15, 21, 24) gummielastisch ausgebildet ist.

2. Verschlusseinheit (10, 15, 21) nach Anspruch 1, **dadurch gekennzeichnet, dass** die Verschlusseinheit (10, 15, 21) einen Zylinderabschnitt (11, 16), der auf den Schlauchanschlussstutzen (6) aufsteckbar ist, und eine den Zylinderabschnitt (11, 16) axial verschließende Stirnwand (12, 17, 22) aufweist, wobei die Stirnwand (12, 17, 22) zumindest teilweise gummielastisch ausgebildet ist.

3. Verschlusseinheit (24) nach Anspruch 1, **dadurch gekennzeichnet, dass** die Verschlusseinheit (24) einen Zylinderabschnitt (16), der auf den Schlauchanschlussstutzen (6) aufsteckbar ist, und einen den Zylinderabschnitt (16) axial verschließenden Gummifaltenbalg (25) aufweist.

4. Verschlusseinheit (10, 15, 21, 24) nach einem der Ansprüche 1 bis 3, **gekennzeichnet durch** wenigstens ein gummielastisches Halteelement (13, 19), über das die Verschlusseinheit (10, 15, 21, 24) an einem abseits des Schlauchanschlussstutzens (6) angeordneten Bauteil (14) des Geräts (1) festlegbar ist.

5. Gerät (1) zum Trocknen von Wäsche, aufweisend wenigstens eine Spüleinheit (2) zum Spülen von wenigstens einem Wärmetauscher einer thermisch an ein Prozessluftsystem des Geräts (1) gekoppelten Wärmepumpe des Geräts (1), wobei die Spüleinheit (2) wenigstens einen Kondensatbehälter und wenigstens eine Pumpe (3) zum Pumpen einer in einer Kondensatwanne des Geräts (1) enthaltenen Flüssigkeit über wenigstens eine Flüssigkeitsleitung (4) in den Kondensatbehälter aufweist, wobei an der Flüssigkeitsleitung (4) wenigstens eine Ventileinheit (5) angeordnet ist, mit der die von der Pumpe (3) geförderte Flüssigkeit wahlweise dem Kondensatbehälter oder einem Schlauchanschlussstutzen (6), an den ein Schlauch zum Abführen der Flüssigkeit aus dem Gerät (1) anschließbar ist, zuführbar ist, **gekennzeichnet durch** wenigstens eine Verschlusseinheit (10, 15, 21, 24) nach einem der Ansprüche 1 bis 4, mit der der ungenutzte Schlauchanschlussstutzen (6) verschlossen ist.
